# FASCICULE DE BREVET EUROPEEN

(11) **EP 2 346 154 B1**
(45) Date de publication et mention de la délivrance du brevet: **25.06.2014**
(21) Numéro de dépôt: 11305025.6
(22) Date de dépôt: 11.01.2011
(51) Int. Cl.: H02M 7/487, H02M 1/32

(54) **Système d'alimentation d'un élément, parmi un rotor et un stator d'une machine électrique, et procédé de commande d'un tel système**
Einspeisungssystem eines Elements zwischen einem Rotor und einem Stator einer elektrischen Maschine, und Steuerungsverfahren eines solchen Systems
System for powering an element among a rotor and a stator of an electric machine, and method for controlling such a system

(30) Priorité: 13.01.2010 FR 1050207
(43) Date de publication de la demande: 20.07.2011
(73) Titulaire: GE Energy Power Conversion Technology Limited, Rugby Warwickshire CV21 1BU (GB)
(72) Inventeur: Claude, M. Jean-Michel, 90110, Felon (FR); Mirzaian,M. Abdollah, 90300, Valdoie (FR); Urbain, M. Matthieu, 90000, Belfort (FR)
(74) Mandataire: Serjeants LLP

(56) Documents cités:
- EP-A2- 1 995 860
- GB-A- 2 197 550
- US-A- 5 912 813

## Description

La présente invention concerne un système d'alimentation d'un élément, parmi un rotor et un stator, d'une machine électrique, du type comprenant :
- un convertisseur d'un courant continu d'entrée en un courant alternatif polyphasé de sortie comportant une pluralité M de phases, le convertisseur comprenant deux bornes d'entrée, le convertisseur étant disposé en entrée dudit élément et étant propre à délivrer audit élément le courant alternatif polyphasé,
- des moyens de commande du convertisseur,
- une banque de stockage comportant au moins un condensateur de stockage disposé entre les bornes d'entrée du convertisseur, et
- un dispositif de protection de l'élément contre les surtensions et/ou les surintensités dudit courant alternatif polyphasé, disposé entre le convertisseur et ledit élément, et comportant une pluralité de branches de commutation agencées entre les phases respectives du courant alternatif polyphasé, chaque branche de commutation comportant deux thyristors connectés tête-bêche et en parallèle.

La présente invention concerne également une chaîne de traction électrique comprenant une machine électrique et un tel système d'alimentation d'un élément de la machine.

L'invention concerne également un procédé de commande d'un tel système d'alimentation.

En particulier, l'invention s'applique aux centrales hydroélectriques et aux éoliennes équipées de machines électriques à vitesse variable et d'un système d'alimentation de la machine électrique. Un tel système d'alimentation présente une puissance élevée, typiquement supérieure à 100 MW.

On connaît un système d'alimentation du type précité. Chaque branche de commutation du dispositif de protection comporte en outre une résistance électrique connectée en série des deux thyristors connectés tête bêche. La résistance permet de réduire les surintensités du courant rotorique et de limiter les oscillations du couple moteur. La valeur maximale de cette résistance électrique est choisie pour éviter la conduction des diodes du convertisseur rotorique lors du défaut.

Lorsqu'une surtension ou une surintensité du courant d'alimentation du moteur est détectée, les thyristors du dispositif de protection sont mis et maintenus en conduction pour court-circuiter l'élément de la machine électrique et le protéger ainsi contre la surtension ou la surintensité. Les thyristors du dispositif de protection sont bloqués, afin de supprimer le court-circuit aux bornes de l'élément de la machine électrique pour alimenter à nouveau ledit élément via le système d'alimentation.

Lorsqu'un thyristor est passant, le blocage du thyristor n'intervient que lorsque son courant s'annule et que sa tension de polarisation est négative. Par conséquent, la durée nécessaire au blocage des thyristors du dispositif de protection est importante pour reprendre plus rapidement le contrôle de la machine, du fait de l'importante période de temps nécessaire à la dissipation du courant dans la résistance électrique.

Un tel dispositif est divulgué par le brevet EP 1 995 860, daté du 26 novembre 2008.

Le but de l'invention est donc de proposer un système d'alimentation permettant de réduire la durée nécessaire au blocage des thyristors du dispositif de protection afin de limiter la période de temps durant laquelle l'élément de la machine électrique n'est pas alimenté.

A cet effet, l'invention a pour objet un système d'alimentation du type précité, caractérisé en ce que les moyens de commande du convertisseur sont propres à appliquer une tension négative aux bornes d'au moins un thyristor pendant une durée supérieure à un temps de désamorçage prédéterminé dudit thyristor.

Suivant d'autres modes de réalisation, le système d'alimentation comprend une ou plusieurs des caractéristiques suivantes, prises isolément ou suivant toutes les combinaisons techniquement possibles :
- chaque branche de commutation comporte également deux résistances, chacune étant connectée en série d'un thyristor respectif ;
- le dispositif de protection comporte M branches de commutation, chaque branche de commutation présentant une extrémité connectée à une phase respective et une autre extrémité connectée à un point commun, de sorte que toutes les branches de commutation sont connectées en étoile audit point commun ;
- le dispositif de protection comporte M-1 branches de commutation, chaque branche de commutation étant connectée entre deux phases successives ;
- tous les thyristors du dispositif de protection sont identiques ;
- la tension du courant continu d'entrée aux bornes de la banque de stockage est supérieure à 5000 V, de préférence sensiblement égale à 8000 V ;
- le nombre M de phases est égal à trois ;
- le système comprend en outre un transformateur de tension alternative relié à un réseau électrique par l'intermédiaire d'un dispositif de sectionnement, et un redresseur de tension connecté entre le transformateur de tension et le convertisseur.

L'invention a également pour objet une chaîne de traction électrique comprenant une machine électrique et un système d'alimentation d'un élément parmi un rotor et un stator de la machine électrique, caractérisée en ce que le système d'alimentation est tel que défini ci-dessus.

L'invention a également pour objet un procédé de commande d'un système d'alimentation d'un élément, parmi un rotor et un stator, d'une machine électrique, le système d'alimentation comprenant :
- un convertisseur d'un courant continu d'entrée en un courant alternatif polyphasé de sortie comportant une pluralité M de phases, le convertisseur étant disposé en entrée dudit élément et propre à délivrer audit élément le courant alternatif polyphasé, le convertisseur comprenant une borne positive d'entrée, une borne négative d'entrée et M bornes de sortie, la borne positive étant reliée au potentiel positif du courant continu d'entrée, la borne négative étant reliée au potentiel négatif du courant continu d'entrée, chaque borne de sortie correspondant à une phase respective du courant de sortie,
- des moyens de commande du convertisseur,
- une banque de stockage comportant au moins un condensateur de stockage disposé entre les bornes d'entrée du convertisseur, et
- un dispositif de protection de l'élément contre les surtensions et/ou les surintensités dudit courant alternatif polyphasé, le dispositif de protection étant disposé entre le convertisseur et ledit élément, et comportant une pluralité de branches de commutation agencées entre les phases respectives du courant alternatif polyphasé, chaque branche de commutation comportant deux thyristors connectés tête-bêche en parallèle, chaque thyristor présentant un temps de désamorçage prédéterminé,
   le procédé étant caractérisé en ce qu'il comprend, pour une unique phase sélectionnée, les étapes suivantes :
- le calcul de signaux de commande du convertisseur suivant une loi de commande, la loi de commande comportant :
   + une première période de connexion de la borne de sortie de ladite phase sélectionnée à la borne positive d'entrée, les autres bornes de sortie étant connectées à la borne négative d'entrée, afin d'imposer une tension négative aux bornes d'un thyristor de la branche de commutation reliée à la borne de sortie de ladite phase sélectionnée, la durée de la première période étant supérieure au temps de désamorçage dudit thyristor, et
   + une deuxième période de connexion de la borne de sortie de ladite phase sélectionnée à la borne négative d'entrée, les autres bornes de sortie étant connectées à la borne positive d'entrée, afin d'imposer une tension négative aux bornes de l'autre thyristor de la branche de commutation reliée à la borne de sortie de ladite phase sélectionnée, la durée de la deuxième période étant supérieure au temps de désamorçage dudit autre thyristor,
- l'application des signaux de commande calculés au convertisseur.

Suivant d'autres modes de réalisation, le procédé de commande comprend une ou plusieurs des caractéristiques suivantes, prises isolément ou suivant toutes les combinaisons techniquement possibles :
- le procédé comprend, pour chacune des M phases du courant alternatif polyphasé de sortie, les étapes suivantes :
- ladite étape de calcul des signaux de commande du convertisseur (30) suivant la loi de commande comportant la première période de connexion de la borne de sortie (44) de la phase respective à la borne positive d'entrée (42A), les autres bornes de sortie (44) étant connectées à la borne négative d'entrée (42B), et la deuxième période de connexion de la borne de sortie (44) de la phase respective à la borne négative d'entrée (42B), les autres bornes (44) de sortie étant connectées à la borne positive d'entrée (42A), et
- ladite étape d'application des signaux de commande calculés au convertisseur ;
- la banque de stockage comprenant deux condensateurs de stockage disposés entre les bornes d'entrée du convertisseur et reliés entre eux en un point milieu, le point milieu étant connecté à une masse électrique d'une part et à une borne de référence du convertisseur d'autre part, les autres bornes de sortie sont reliées à la borne négative d'entrée ou à la borne de référence lors de la première période de la loi de commande, et dans lequel les autres bornes de sortie sont reliées à la borne positive d'entrée ou à la borne de référence lors de la deuxième période de la loi de commande ;
- les autres bornes de sortie sont reliées à la borne de référence lors des première et deuxième périodes de la loi de commande ;
- le temps de désamorçage de chaque thyristor est compris entre 300 µs et 700 µs, de préférence égal à 500 µs.

Ces caractéristiques et avantages de l'invention apparaîtront à la lecture de la description qui va suivre, donnée uniquement à titre d'exemple, et faite en référence aux dessins annexés, sur lesquels :
- la figure 1 est une représentation schématique d'une chaîne de traction selon l'invention, reliée à un réseau électrique,
- la figure 2 est un schéma électrique d'un système d'alimentation d'un rotor d'une machine électrique de la chaîne de traction de la figure 1,
- la figure 3 est un chronogramme de différents états de la chaîne de traction de la figure 1 lors d'un défaut sur le réseau électrique,
- la figure 4 est un organigramme représentant un procédé de commande du système d'alimentation selon l'invention,
- la figure 5 est un ensemble de courbes représentant, en fonction du temps, les tensions respectives des phases du courant d'alimentation du rotor lors du blocage de thyristors d'un dispositif de protection du système d'alimentation de la figure 2,
- la figure 6 est un ensemble de courbes représentant, en fonction du temps, les intensités respectives des courants circulant dans les thyristors respectifs du dispositif de protection lors du blocage de ces derniers,
- la figure 7 est un ensemble de courbes représentant l'évolution simultanée en fonction du temps de la tension et de l'intensité d'un courant circulant dans un thyristor lors de son blocage,
- la figure 8 est une représentation schématique du système d'alimentation selon un deuxième mode de réalisation de l'invention, et
- la figure 9 est une vue analogue à celle de la figure 2 selon un troisième mode de réalisation de l'invention.

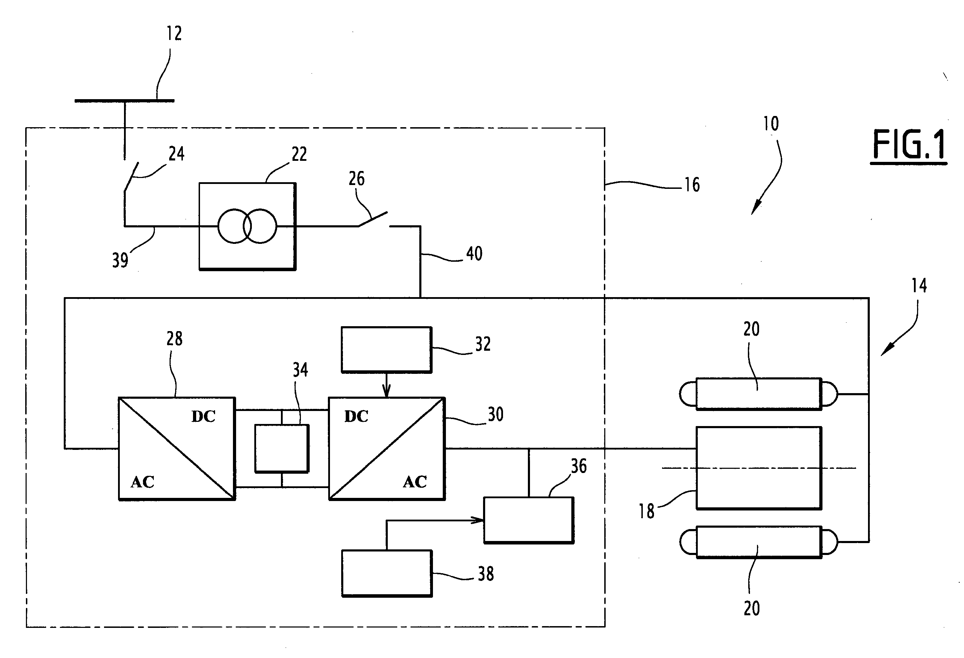

Sur la figure 1, une chaîne de traction électrique 10 est reliée à un réseau électrique 12. Le réseau électrique 12 est, par exemple, un réseau alternatif triphasé de tension élevée, typiquement de l'ordre de 400000 V.

La chaîne de traction électrique 10 comprend une machine électrique 14 et un système 16 d'alimentation de la machine, reliée au réseau électrique 12.

La machine électrique 14 comporte un rotor 18 et un stator 20, comprenant chacun des enroulements destinés à être alimentés par le système d'alimentation 16. La machine électrique 14 est, par exemple, un moteur électrique triphasé. La machine électrique 14 présente une puissance nominale de valeur supérieure à 100 MW, par exemple égale à 275 MW.

Le système d'alimentation 16 comprend un transformateur de tension 22 relié au réseau électrique 12 par l'intermédiaire d'un dispositif de sectionnement haute tension 24, et un dispositif de sectionnement basse tension 26 connecté en sortie du transformateur de tension 22.

Le système d'alimentation 16 comporte également un redresseur de tension 28 connecté en sortie du dispositif de sectionnement basse tension 26, un convertisseur 30 d'un courant continu d'entrée en un courant alternatif polyphasé de sortie, le convertisseur 30 étant disposé en sortie du redresseur de tension 28 et propre à délivrer le courant alternatif polyphasé au rotor 18 de la machine électrique.

Le système d'alimentation 16 comprend également des moyens 32 de commande du convertisseur, une banque de stockage 34 disposée entre le redresseur 28 et l'onduleur 30, un dispositif 36 de protection du rotor contre les surtensions et/ou les surintensités du courant alternatif polyphasé, et des moyens 38 de commande dudit dispositif de protection.

Le transformateur de tension 22 est propre à transformer le courant alternatif de tension élevée fourni par le réseau électrique 12 en un courant alternatif de tension inférieure. Plus précisément, le transformateur de tension 2 est propre à délivrer un courant présentant une basse tension de valeur, par exemple, égale à 15,75 kV à partir de la haute tension du réseau électrique 12 de valeur, par exemple, égale à 400 kV.

Le dispositif de sectionnement haute tension 24 est mobile entre une position d'ouverture et une position de fermeture d'une première liaison électrique 39 reliant le réseau électrique 12 au transformateur de tension 22.

Le dispositif de sectionnement haute tension 24 est propre à couper le courant à haute tension de valeur, par exemple, égale à 400 kV circulant à travers la première liaison électrique 39. Le temps de réponse du dispositif de sectionnement haute tension 24, correspondant à l'intervalle de temps compris entre la détection d'une surtension ou d'une surintensité et la commutation en position d'ouverture, est de l'ordre de 100 ms.

Le dispositif de sectionnement moyenne tension 26 est mobile entre une position d'ouverture et une position de fermeture d'une deuxième liaison électrique 40 reliant le transformateur de tension 22 au redresseur 28, d'une part, et au stator 20 de la machine électrique, d'autre part. Le dispositif de sectionnement moyenne tension 26 est propre à sectionner le courant à moyenne tension de valeur, par exemple, égale à 15,75 kV circulant à travers la deuxième liaison électrique 40. Le temps de réponse du dispositif de sectionnement basse tension 26 est de l'ordre de 100 ms.

Le redresseur de tension 28 est propre à convertir le courant alternatif délivré par le transformateur de tension 22 en un courant continu de sortie. La tension du courant continu de sortie délivré par le redresseur de tension 28 dépend de l'application est, par exemple, de valeur supérieure à 5000 V, de préférence sensiblement égale à 8000 V.

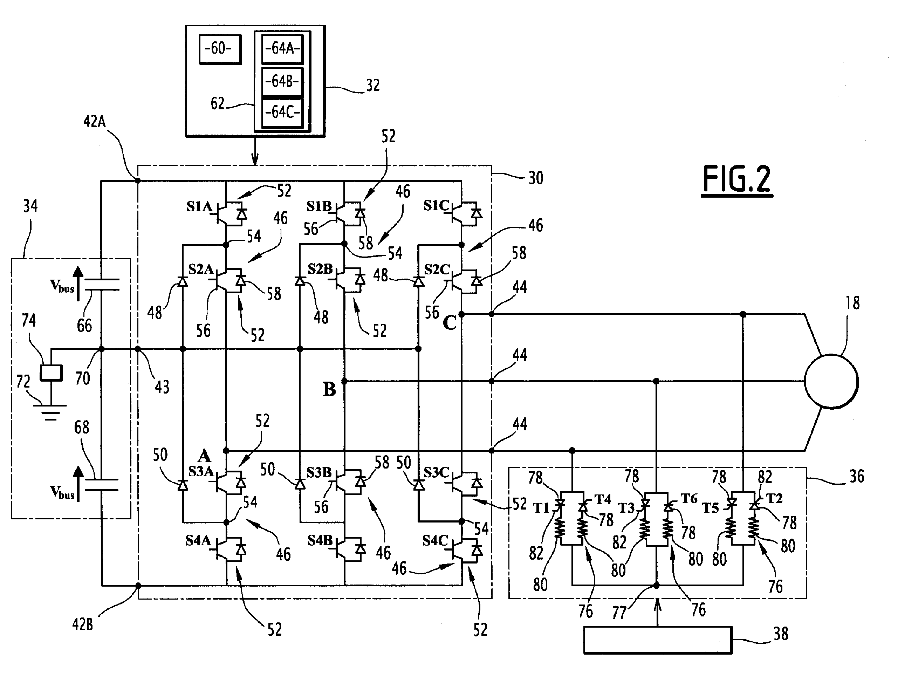

Le convertisseur 30 comporte une borne positive d'entrée 42A, une borne négative d'entrée 42B, une borne de référence 43 et M bornes de sortie 44. Chaque borne de sortie 44 correspond à une phase respective du courant alternatif polyphasé de sortie propre à être délivré par le convertisseur 30 et comportant une pluralité M de phases, M étant un nombre entier. Dans l'exemple de réalisation de la figure 2, le nombre M de phases est égal à trois.

Dans l'exemple de réalisation de la figure 2, le convertisseur 30 est un onduleur triphasé trois niveaux clampé par le neutre. L'onduleur 30 comprend, pour chaque borne de sortie 44 correspondant à une phase respective A, B, C, deux branches de commutation 46, une première diode 48 et une deuxième diode 50.

Chaque branche de commutation 46 est connectée entre la borne de sortie 44 de la phase A, B, C correspondante et une borne d'entrée 42A, 42B respective. Chaque branche de commutation 46 comprend deux interrupteurs électroniques 52 connectés en série et dans le même sens, et reliés entre eux par un point milieu 54. Les quatre interrupteurs électroniques 52 correspondant à la première phase A sont respectivement notés S1A, S2A, S3A et S4A depuis la borne positive 42A jusqu'à la borne négative 42B. De manière analogue, les quatre interrupteurs électroniques 52 correspondant à la deuxième phase B, et respectivement la troisième phase C, sont notés S1 B, S2B, S3B, S4B, et respectivement S1C, S2C, S3C, S4C, depuis la borne positive 42A jusqu'à la borne négative 42B.

Chaque diode 48, 50 est connectée entre la borne de référence 43 et un point milieu 54 respectif. Chaque première diode 48 a son anode reliée à la borne de référence 43 et sa cathode reliée au point milieu 54 respectif. Chaque seconde diode 50 a son anode reliée au point milieu 54 respectif, et sa cathode reliée à la borne de référence 43.

Chaque interrupteur électronique 52 est un interrupteur bidirectionnel en courant et unidirectionnel en tension. Chaque interrupteur électronique 52 comprend un transistor 56 et une diode 58 connectée en antiparallèle assurant ainsi des trajets de circulation bidirectionnelle de courant lorsque le transistor 56 est passant. Tous les interrupteurs électroniques 52 sont, par exemple, identiques. Le transistor 56 est, par exemple, un transistor bipolaire à grille isolée, également appelé transistor IGBT (de l'anglais Insulated Gate Bipolar Transistor). La grille de chaque transistor 56 est reliée aux moyens de commande 32 pour recevoir un signal de commande correspondant.

Les moyens de commande 32 sont reliés à chacun des interrupteurs électroniques 52, comme indiqué précédemment, et sont propres à envoyer des signaux de commande auxdits interrupteurs 52. Les moyens de commande 32 comportent une unité de traitement d'informations formée, par exemple, d'un processeur de données 60 associé à une mémoire 62. La mémoire 62 est apte à stocker un logiciel 64A de sélection d'une borne de sortie 44 à connecter successivement à la borne positive 42A, puis à la borne négative 42B, un logiciel 64B de calcul des signaux de commande en fonction de la borne de sortie sélectionnée, et un logiciel 64C d'application des signaux de commande au convertisseur 30.

En variante, les moyens de commande 32 sont réalisés sous forme de composants logiques programmables ou encore sous forme de circuits intégrés dédiés.

La banque de stockage 34 comprend un premier condensateur 66 et un deuxième condensateur 68 connectés en série entre les deux bornes d'entrée 42A, 42B, et reliés entre eux en un point milieu 70 connecté à la borne de référence 43. Le point milieu 70 est connecté à une masse électrique 72 par l'intermédiaire d'un composant passif 74.

Chaque condensateur 66, 68 présente une tension identique V_{bus} à ses bornes. Autrement dit, la borne positive 42A présente un potentiel électrique égal à +V_{bus} par rapport à la masse électrique 72, et la borne négative 42B présente un potentiel de valeurs égal à -V_{bus} par rapport à la masse électrique 72. La tension du courant continu d'entrée aux bornes de la banque de stockage 34 est égale à 2 x V_{bus}, et est, par exemple, supérieure à 5000 V, de préférence sensiblement égale à 8000 V. Autrement dit, la valeur de la tension V_{bus} est par exemple sensiblement égale à 4000 V.

Le dispositif de protection 36 est disposé entre le convertisseur 30 et le rotor 18. Le dispositif de protection 36 comporte M branches de commutation 76 agencées entre les phases respectives du courant alternatif polyphasé délivré en sortie du convertisseur 30. Dans l'exemple de réalisation de la figure 2, le dispositif de protection 36 comporte trois branches de commutation 76.

Le dispositif de protection 36 est propre à commuter entre une position d'ouverture des M branches de commutation et une position de fermeture desdites M branches de commutation. En position d'ouverture du dispositif de protection 36, le rotor 18 est normalement alimenté par l'onduleur 30, et en position de fermeture dudit dispositif de protection 36, le rotor 18 est mis en court-circuit et ainsi protégé contre les surtensions et/ou les surintensités du courant alternatif polyphasé.

Dans l'exemple de réalisation de la figure 2, chaque branche de commutation 76 présente une extrémité connectée à une phase respective et une autre extrémité connecté à un point commun 77, de sorte que toutes les branches de commutation 76 sont connectées en étoile audit point commun 77.

Chaque branche de commutation 76 comporte deux thyristors 78 connectés tête-bêche et en parallèle. Chaque branche de commutation 76 comporte également deux résistances 80, chacune étant connectée en série d'un thyristor 78 respectif.

Chaque thyristor 78 comporte une gâchette 82 reliée aux moyens de commande 38 pour recevoir un signal de commande correspondant. Chaque thyristor 78 présente un temps de désamorçage Tq et un courant de maintien I_{H}. Le temps de désamorçage Tq de chaque thyristor 78 correspond à la durée minimale pendant laquelle l'intensité du courant d'anode du thyristor 78 doit être inférieure à l'intensité du courant de maintien I_{H} pour permettre le blocage dudit thyristor 78.

Le temps de désamorçage Tq et le courant de maintien I_{H} présentent des valeurs spécifiques du thyristor 78 utilisé. Le temps de désamorçage Tq est, par exemple, de valeur comprise entre 300 µs et 700 µs, de préférence égale à 500 µs. Le courant de maintien I_{H} est, par exemple, de valeur sensiblement égale à 100 mA. Tous les thyristors 78 du dispositif de protection sont identiques et présentent un même temps de désamorçage Tq et un même courant de maintien I_{H}.

Dans l'exemple de réalisation de la figure 2, les six thyristors 78 du dispositif de protection sont notés T1 à T6 dans l'ordre de leur mise en conduction lors de la commutation du dispositif de protection 36 vers sa position de fermeture.

Chaque résistance 80 est connectée en série d'un thyristor 78 respectif et est propre à créer une tension négative aux bornes de l'autre thyristor 78 de la branche de commutation, lorsqu'elle est parcourue par un courant, c'est-à-dire lorsque le thyristor 78 en série duquel elle est agencée est en conduction.

Les moyens de commande 32 sont propres à commander le convertisseur 30 pour appliquer une tension négative aux bornes d'au moins un thyristor 78 pendant une durée supérieure au temps de désamorçage T_{q} prédéterminé dudit thyristor.

Les moyens de commande 38 sont reliés à chacun des thyristors 78, comme indiqué précédemment, et sont propres à envoyer des signaux de commande auxdits thyristors 78. Plus précisément, les moyens de commande 38 sont propres, d'une part, à mettre et maintenir en conduction chaque thyristor 78 respectif, et, d'autre part, à bloquer chaque thyristor 78 respectif lorsque l'intensité du courant d'anode du thyristor 78 est inférieure à l'intensité du courant de maintien I_{H} pendant une durée supérieure à son temps de désamorçage T_{q}. Les moyens de commande 38 comportent une unité de traitement d'informations formée, par exemple, d'un processeur de données associé à une mémoire. La mémoire est apte à stocker un logiciel de calcul des signaux de commande, et un logiciel d'application des signaux de commande à la gâchette 82 respective.

En variante, les moyens de commande 38 sont réalisés sous forme de composants logiques programmables ou encore sous forme de circuits intégrés dédiés.

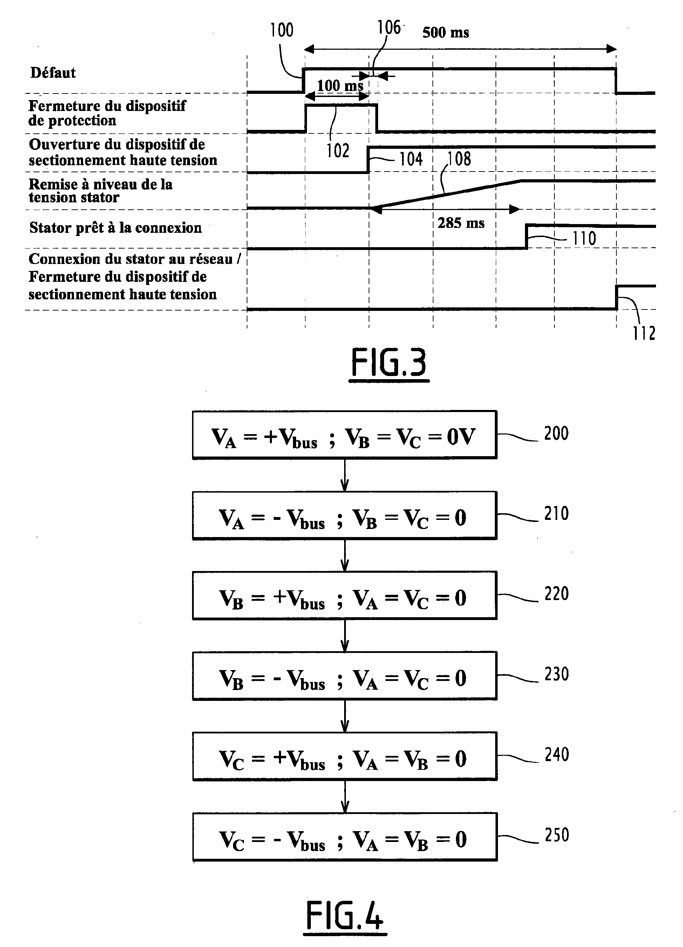

Le fonctionnement du système d'alimentation 16 selon l'invention va désormais être expliqué à l'aide des figures 3 à 9.

Sur la figure 3, lorsqu'un défaut 100 est détecté sur le réseau électrique 12, les moyens de commande 38 commandent la fermeture 102 du dispositif de protection 36. Le défaut 100 est, par exemple, un creux de tension créant une discontinuité de tension et engendrant l'apparition de surintensités.

La fermeture 102 du dispositif de protection est obtenue par une commande de mise et de maintien en conduction de tous les thyristors 78 du dispositif de protection afin de mettre en court-circuit le rotor 18 de la machine électrique et de le protéger ainsi contre une surtension ou une surintensité résultant du défaut 100. La fermeture 102 du dispositif de protection est effectuée de manière quasi-instantanée, et le rotor 18 et le convertisseur 30 sont donc protégés presque immédiatement après l'apparition du défaut 100, alors que le dispositif de sectionnement haute tension 24 nécessite une durée d'environ 100 ms pour commuter de sa position de fermeture de la première liaison 39 à sa position d'ouverture, la commutation étant représentée par le front montant 104.

Lorsque le dispositif de sectionnement haute tension 24 est en position d'ouverture, le rotor 18 et le stator 20 de la machine électrique sont isolés du réseau électrique 12, et il n'est plus nécessaire de maintenir le dispositif de protection 36 en position de fermeture, celui-ci étant destiné à assurer la protection du rotor 18 de manière transitoire entre l'apparition du défaut 100 et l'ouverture effective 104 du dispositif de sectionnement haute tension.

Un procédé de commande du système d'alimentation est alors mis en oeuvre afin de commuter le dispositif de protection 36 de sa position de fermeture vers sa position d'ouverture au cours d'une phase de blocage 106. La phase de blocage 106 présente, selon l'invention, une durée très brève, dépendant du temps de désamorçage Tq du thyristor. La durée de la phase de blocage 106 est, par exemple, inférieure à 30 ms, de préférence égale à 22 ms.

Le procédé de commande du système d'alimentation 14 au cours de la phase de blocage 106 sera décrit plus en détails par la suite à l'aide de la figure 4.

Lorsque le dispositif de protection 36 est en position d'ouverture, une phase 108 de remise à niveau de la tension aux bornes du stator 20 est alors prévue. Il est en effet nécessaire de s'assurer que les tensions en amont et en aval du dispositif de sectionnement haute tension 24 sont sensiblement de même amplitude et en phase avant de commuter le dispositif de sectionnement haute tension 24 de sa position d'ouverture vers sa position de fermeture, afin d'éviter l'apparition de surintensité au moment de sa fermeture. La phase de remise à niveau 108 présente une durée sensiblement égale à 285 ms.

La tension présente aux bornes du stator 20, lors de cette phase de remise à niveau 108 et jusqu'à ce que le dispositif de sectionnement haute tension 24 soit à nouveau en position de fermeture, est une tension induite de la tension présente aux bornes du rotor 18. Le rotor 18 est en effet alimenté par l'intermédiaire de l'onduleur 30 et de la banque de stockage 34 lors de la phase de remise à niveau 108 qui est successive de la phase de blocage 106.

Lorsque le défaut a disparu et que le stator 20 est prêt à être à nouveau connecté au réseau électrique 12 (front montant 110), le dispositif de sectionnement haute tension 24 est alors commuté de sa position d'ouverture vers sa position de fermeture afin de relier à nouveau le système d'alimentation 16 au réseau électrique 12 (front montant 112).

Le procédé de commande du système d'alimentation 16 au cours de la phase de blocage 106 correspondant à la commutation du dispositif de protection 36 de sa position de fermeture à sa position d'ouverture va maintenant être décrit plus en détails à l'aide de la figure 4.

Le convertisseur 30 est un onduleur trois niveaux, et est propre à délivrer, de manière non transitoire et pour chacune des M phases du courant alternatif polyphasé, une tension de sortie de valeur égale à un niveau parmi trois niveaux de tension différents. Dans l'exemple de réalisation des figures 2 à 4, les trois niveaux de tension de sortie possibles sont +V_{bus}, 0, -V_{bus}, soit par exemple +4 kV, 0 kV, -4 kV.

Le procédé de commande comprend, pour chacune des M phases du courant alternatif polyphasé en sortie du convertisseur 30 une étape de calcul de signaux de commande du convertisseur 30 suivant une loi de commande, et une étape d'application des signaux de commande calculés au convertisseur 30 par l'intermédiaire des moyens de commande 32.

La loi de commande comporte, pour chacune des M phases du courant alternatif polyphasé, une première période de connexion de la borne de sortie 44 de la phase respective à la borne positive d'entrée 42A, les autres bornes de sortie 44 étant connectées à la borne négative d'entrée 42B ou à la borne de référence 43, afin d'imposer une tension négative aux bornes d'un thyristor 78 de la branche de commutation 76 reliée à la borne de sortie 44 de la phase respective. La durée de la première période de connexion est supérieure au temps de désamorçage T_{q} dudit thyristor 78.

La loi de commande comporte, à la suite de cette première période de connexion, une deuxième période de connexion de la borne de sortie 44 de ladite phase respective à la borne négative d'entrée 42B, les autres bornes de sortie 44 étant connectés à la borne positive d'entrée 42A ou à la borne de référence 43, afin d'imposer une tension négative aux bornes de l'autre thyristor 78 de ladite branche de commutation 76 reliée à la borne de sortie 44 de ladite phase respective. La durée de la deuxième période de connexion est supérieure au temps de désamorçage T_{q} dudit autre thyristor 78.

Les autres bornes de sortie 44 sont de préférence connectées à la borne de référence 43 lors des première et deuxième périodes de la loi de commande pour chacune des M phases.

Autrement dit, dans l'exemple de réalisation de la figure 4 pour les trois phases A, B, C du courant triphasé en sortie du convertisseur 30, le procédé de commande comporte une étape 200 de connexion de la borne de sortie 44 de la première phase A à la borne positive d'entrée 42A, les autres bornes de sortie 44 des phases B et C étant connectées à la borne de référence 43. La borne positive d'entrée 42A étant reliée au potentiel +V_{bus} et la borne de référence 43 étant reliée au potentiel nul, la phase A présente un potentiel +V_{bus}, et les phases B et C présentent un potentiel nul par rapport à la masse électrique 72 durant l'étape 200.

L'étape 200 correspond ainsi, pour la première phase A, à l'étape de calcul des signaux de commande suivant la première période de la loi de commande, suivie de l'étape d'application desdits signaux de commande calculés au convertisseur 30.

Le procédé comporte ensuite une étape 210 de connexion de la borne de sortie 44 de la phase A à la borne négative d'entrée 42B, les autres bornes de sortie 44 des phases B et C étant reliées à la borne de référence 43. En d'autres termes, la phase A est au potentiel -V_{bus}, et les phases B et C sont au potentiel nul lors de l'étape 210.

L'étape 210 correspond ainsi, pour la première phase A, à l'étape de calcul des signaux de commande du convertisseur 30 suivant la deuxième période de la loi de commande, suivie de l'application des signaux de commande calculés au convertisseur 30.

De manière analogue, le procédé de commande comporte ensuite une étape 220 de connexion de la borne de sortie 44 de la phase B à la borne positive d'entrée 42A, les autres bornes de sortie 44 des phases A et C étant connectées à la borne de référence 43. Durant la phase 220, la phase B est donc au potentiel +V_{bus}, et les phases A et C sont au potentiel nul.

L'étape 220 est alors suivie d'une étape 230 de connexion de la borne de sortie de la phase B à la borne négative d'entrée 42B, les autres bornes de sortie des phases A et C étant connectées à la borne de référence 43.

Le procédé de commande comporte enfin une étape 240 de connexion de la borne de sortie de la phase C à la borne positive 42A, les autres bornes de sorties des phases A et B étant connectées à la borne de référence 43, et une étape 250 de connexion de ladite borne de sortie de la phase C à la borne négative d'entrée 42B, les autres bornes de sortie des phases A et B étant connectées à la borne de référence 43.

Chacune des étapes 200 à 250 présentent une durée supérieure au temps de désamorçage T_{q} des thyristors 78 tous identiques.

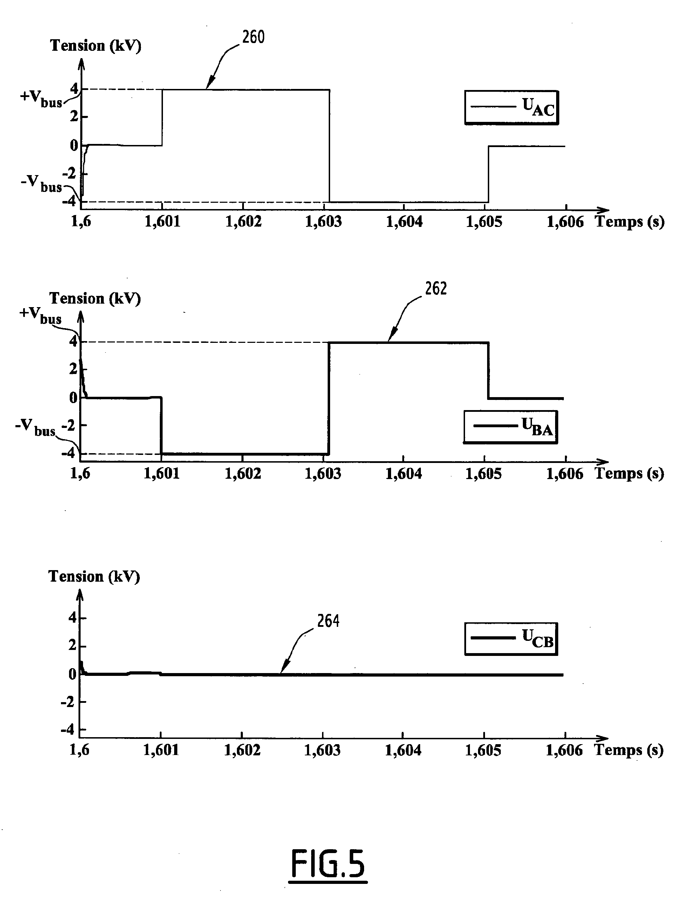

Sur la figure 5, les courbes 260, 262, 264 représentent respectivement les tensions U_{AC}, U_{BA}, U_{CB} entre les phases A, B, C respectives. Plus précisément, les courbes 260, 262, 264 représentent les tensions entre phases A, B, C lors des étapes 200 et 210 correspondant respectivement aux première et deuxième périodes de connexion pour la phase A. On note ainsi que l'étape 200 se déroule sensiblement entre les instants de temps 1,601 s et 1,603 s, la tension U_{AC} étant alors égale à +4 kV, soit +V_{bus}, la tension U_{BA} étant égale à -4 kV, soit -V_{bus}, et la tension U_{CB} étant sensiblement nulle.

L'étape 210 se déroule ensuite sensiblement entre les instants de temps 1,603 s et 1,605 s, la tension U_{AC} étant alors égale à -V_{bus}, la tension U_{BA} étant égale à +V_{bus}, et la tension U_{CB} étant toujours nulle.

La durée des étapes 200 et 210 étant sensiblement égale à 2 ms, et est donc supérieure au temps de désamorçage T_{q} des thyristors 78 de valeur comprise entre 300 µs et 500 µs.

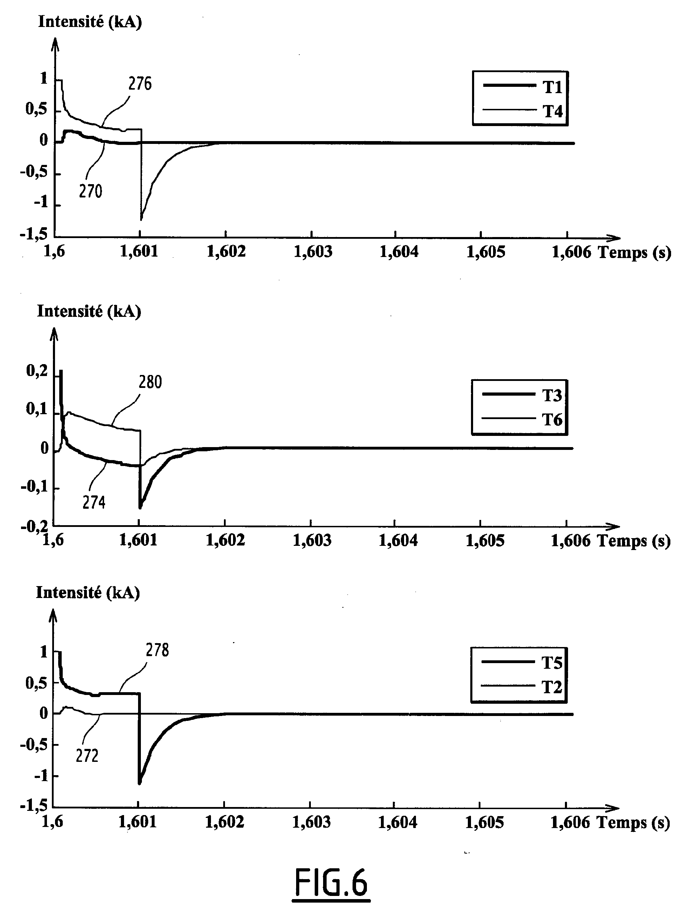

Sur la figure 6, les courbes 270, 272, 274, 276, 278 et 280 représentent l'intensité du courant circulant à travers chacun des thyristors T1 à T6 respectifs.

Les courbes 274, 276 et 278 montrent notamment que le courant circulant à travers les thyristors T3, T4 et T5 présentent un pic d'intensité négative pour l'instant de temps 1,601 s correspondant au début de l'étape 200, la valeur de l'intensité décroissant ensuite en valeur absolue jusqu'à l'instant de temps 1,602 s. Les thyristors T3, T4 et T5 sont donc parcourus par un courant de valeur inférieure à leur courant de maintien, par exemple égal à 100 mA, pendant une durée supérieure à leur temps de désamorçage T_{q}, par exemple égal à 400 µs. En d'autres termes, l'étape 200 de connexion de la phase A à la borne positive d'entrée 42A, les autres bornes de sortie des phases B et C étant connectées à la borne de référence 43, entraîne le blocage des thyristors T3, T4 et T5 dans l'exemple de réalisation de la figure 6.

Dans I exemple de réalisation de la figure 6, les thyristors T1 et T2 représentés respectivement par les courbes 270 et 272 étaient déjà bloqués à l'instant 1,601 s correspondant au début du procédé de commande, de sorte que le blocage des thyristors T3, T4 et T5 dû à la première période de connexion de la borne de sortie de la phase A à la borne positive 42A engendre également le blocage du dernier thyristor T6, les autres thyristors T1 à T5 étant bloqués. La courbe 280 illustre le blocage du thyristor T6, un courant avec un pic d'intensité négative parcourant le thyristor T6 pendant environ 500 µs à partir de l'instant de temps 1,601 s.

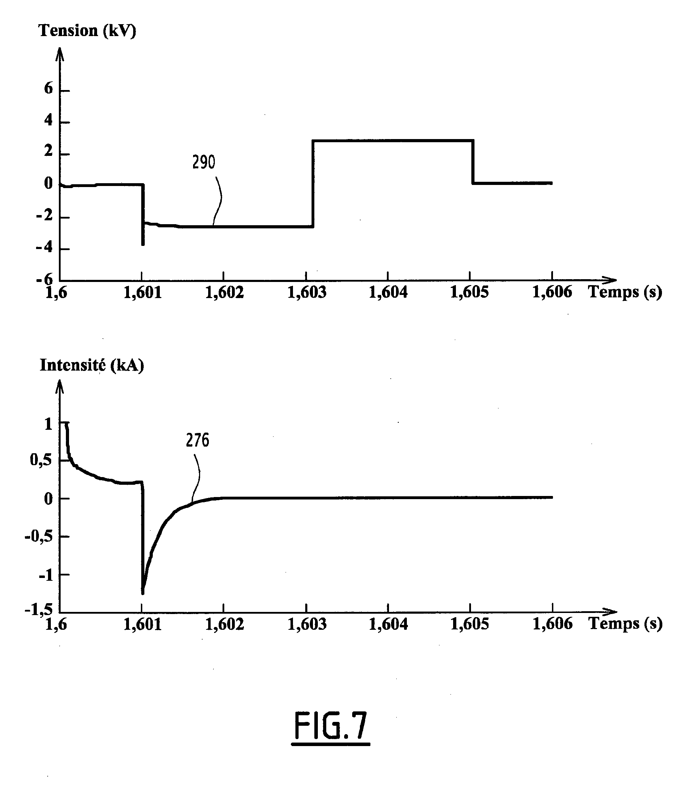

Sur la figure 7, la courbe 290 représente la tension aux bornes du thyristor T4 lors des étapes 200 et 210. La courbe 276 représentant l'intensité du courant circulant à travers le thyristor T4 est également illustrée sur la figure 7. Les courbes 276 et 290 illustrent alors le blocage forcé du thyristor T4 de par la tension négative à ses bornes et le courant de recouvrement inverse le traversant pendant une durée supérieure à son temps de désamorçage T_{q}.

Lors de l'étape 200, un courant positif circule nécessairement à travers le thyristor T1, la tension U_{AC} étant positive et la tension U_{CB} étant nulle, et engendre une différence de potentiel aux bornes de la résistance 80 connectée en série du thyristor T1. Le thyristor T4 est donc nécessairement polarisé négativement (figure 7) de par la différence de potentiel aux bornes de la résistance 80 connectée en série du thyristor T1, pendant une durée supérieure à son temps de désamorçage T_{q}, ce qui provoque son blocage forcé. L'étape 200 engendre donc nécessairement le blocage du thyristor T4.

De manière analogue, l'étape 210 engendre nécessairement le blocage du thyristor T1, la phase A étant alors au potentiel -V_{bus} pendant que les phases B et C sont au potentiel nul.

De manière analogue encore, les étapes 220 et 230 engendrent nécessairement le blocage des thyristors T6 et T3, et les étapes 240 et 250 engendrent nécessairement le blocage des thyristors T2 et T5.

Le procédé de commande garantit alors que les six thyristors T1 à T6 du dispositif de protection 36 sont bloqués à l'issue de la phase de blocage quel que soit l'état, à savoir en conduction ou bloqué, dans lequel se trouvait chacun des thyristors T1 à T6.

Le procédé de commande selon l'invention permet ainsi le passage du dispositif de protection 36 de sa position de fermeture à sa position d'ouverture en un laps de temps très court, la durée de la phase blocage 106 étant inférieure à 30 ms.

On conçoit ainsi que le système d'alimentation 16 selon l'invention permet de réduire la durée nécessaire au blocage des thyristors 78 du dispositif de protection, afin de limiter la perte de temps durant laquelle le rotor 18 de la machine électrique n'est pas alimenté.

En variante, le procédé de commande comprend, pour une unique phase sélectionnée, ladite étape de calcul des signaux de commande du convertisseur 30 suivant une loi de commande et ladite étape d'application de signaux de commande calculés au convertisseur 30.

La loi de commande comporte alors une première période de connexion de la borne de sortie 44 de ladite phase sélectionnée à la borne positive d'entrée 42A, les autres bornes de sortie 44 étant connectées à la borne négative d'entrée 42B ou à la borne de référence 43, et une deuxième période de connexion de ladite borne de sortie 44 de la phase sélectionnée à la borne négative d'entrée 42B, les autres bornes de sortie 44 étant connectées à la borne positive d'entrée 42A ou à la borne de référence 43. La durée des première et deuxième périodes est supérieure au temps de désamorçage T_{q} des thyristors 78.

En effet, il est suffisant de mettre en oeuvre lesdites étapes de calcul de signaux et d'application des signaux calculés pour une unique phase sélectionnée dans certaines configurations du dispositif de protection 36, notamment dans le cas où, préalablement à la phase de blocage 106, tous les thyristors 78 du dispositif de protection sont en conduction.

En effet, dans l'hypothèse où les thyristors T1 à T6 sont en conduction au début de la phase de blocage 106, l'étape 200 engendre, par exemple, nécessairement le blocage des thyristors T4, T3 et T5, puisque dans ce cas un courant positif circule nécessairement à travers les thyristors T1, T6 et T2 de par la polarisation de la phase A au potentiel +V_{bus} et des phases B et C au potentiel nul. Plus précisément, le blocage des thyristors T4, T3 et T5 est provoqué par la tension négative à leurs bornes pendant une durée supérieure à leur temps de désamorçage T_{q} de par le courant circulant à travers les résistances 80 en série respectivement des thyristors T1, T6 et T2.

De manière analogue, l'étape 210 engendre dans ce cas nécessairement le blocage des thyristors T1, T6 et T2 respectifs, de sorte qu'à l'issue des étapes 200 et 210 relatives à la phase sélectionnée A, tous les thyristors T1 à T6 sont bloqués.

On conçoit ainsi que cette variante du procédé de commande lors de la phase de blocage permet de réduire la durée nécessaire au blocage des thyristors du dispositif de protection.

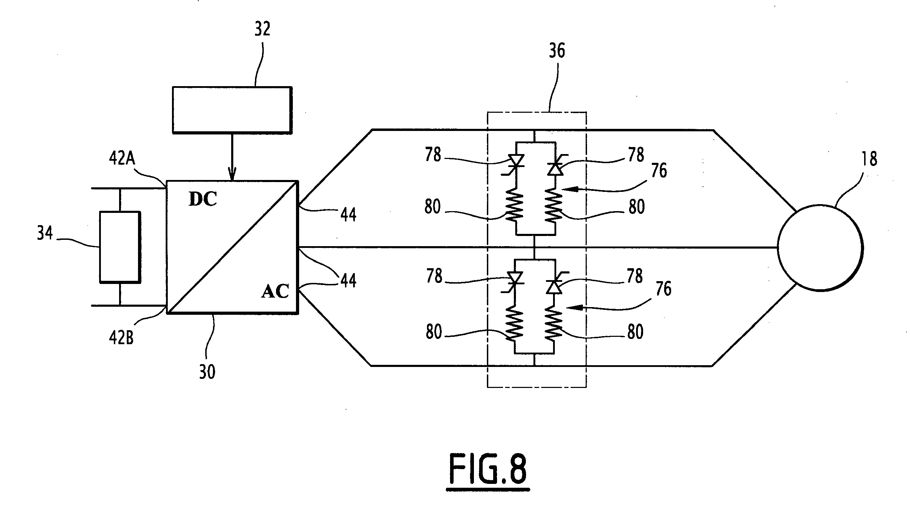

La figure 8 illustre un deuxième mode de réalisation, pour lequel les éléments analogues au premier mode de réalisation décrit précédemment sont repérés par des références identiques.

Selon le deuxième mode de réalisation, le dispositif de protection 36 comprend M-1 branches de commutation 76. Chaque branche de commutation 76 est connectée entre deux phases successives des M phases du courant alternatif triphasé délivré en sortie du convertisseur 30, et les M-1 branches de commutation 76 ne sont pas connectées en un point commun.

Dans l'exemple de réalisation de la figure 8, le nombre M de phases est égal à trois, et le dispositif de protection 36 comporte deux branches de commutation 76.

Chaque branche de commutation 76 comporte, comme décrit précédemment, deux thyristors 78 connectés tête-bêche et en parallèle, ainsi que deux résistances 80. Chaque résistance 80 est connectée en série d'un thyristor 78 respectif. Tous les thyristors 78 du dispositif de protection sont, par exemple, identiques.

Le fonctionnement de ce deuxième mode de réalisation est analogue à celui du premier mode de réalisation décrit précédemment, et n'est donc pas décrit à nouveau.

Ce deuxième mode de réalisation présente l'avantage de réduire les coûts de fabrication par rapport au premier mode de réalisation décrit précédemment, puisque le dispositif de protection 36 comporte quatre thyristors (au lieu de six thyristors dans le premier mode de réalisation). Toutefois, ce deuxième mode de réalisation engendre, lors de la commutation du dispositif de protection de son état de fermeture à son état d'ouverture, des courants circulant dans le convertisseur 30 qui présentent des pics d'intensité nettement plus importante que ceux des courants circulant dans le convertisseur 30 du premier mode de réalisation.

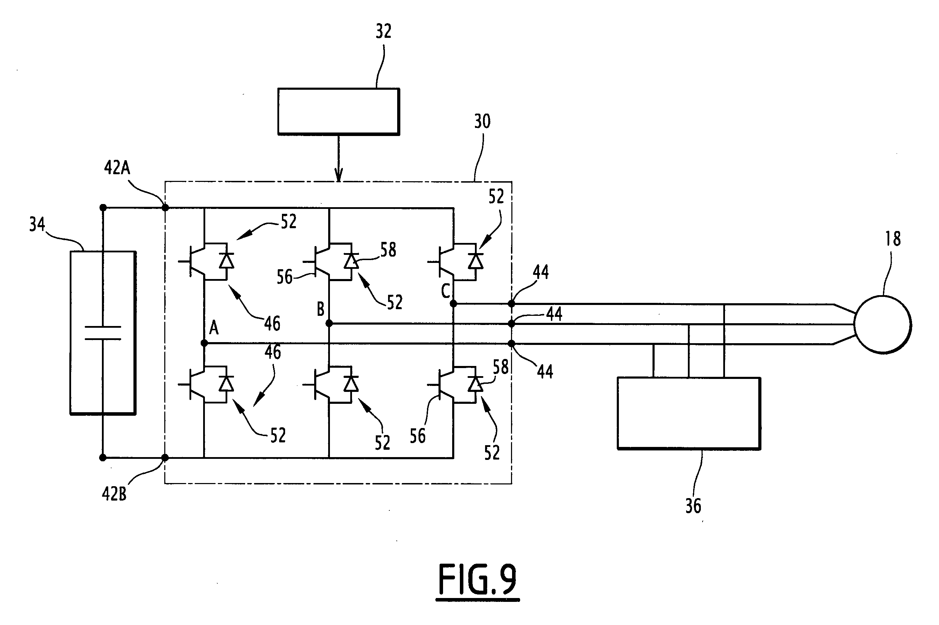

La figure 9 illustre un troisième mode de réalisation, pour lequel les éléments analogues au premier mode de réalisation décrit précédemment sont repérés par des références identiques.

Selon ce troisième mode de réalisation, le convertisseur 30 est un onduleur à deux niveaux, et chaque branche de commutation 46 du convertisseur comporte un unique interrupteur électronique 52. Chaque interrupteur électronique 52 est, comme décrit précédemment, un interrupteur bidirectionnel en courant et unidirectionnel en tension, et comprend un transistor 56 et une diode 58 connectée en antiparallèle. Le transistor 56 est, par exemple, un transistor IGBT. La grille de chaque transistor 56 est reliée aux moyens de commande 32 pour recevoir le signal de commande correspondant.

La banque de stockage 34 comporte un unique condensateur connecté entre la borne positive 42A et la borne négative 42B.

Le fonctionnement de ce troisième mode de réalisation est analogue à celui du premier mode de réalisation décrit précédemment, et n'est donc pas décrit à nouveau de manière détaillée. Lorsque la borne de sortie 44 de la phase respective est connectée à la borne positive 42A lors de la première période de connexion, les autres bornes de sortie 44 sont connectées à la borne négative 42B, et lorsque la borne de sortie 44 de ladite phase respective est connectée à la borne négative d'entrée 42B lors de la deuxième période de connexion, les autres bornes de sortie 44 sont connectées à la borne positive d'entrée 42A.

Le convertisseur 30 est un onduleur à deux niveaux, et est propre à délivrer, de manière non transitoire et pour chacune des M phases du courant alternatif polyphasé, une tension de sortie de valeur égale à un niveau parmi deux niveaux de tension différents. Dans l'exemple de réalisation de la figure 9, les deux niveaux de tension de sortie possibles sont +V_{bus}, -V_{bus}, soit par exemple +4 kV, -4 kV.

Les avantages de ce troisième mode de réalisation sont analogues à ceux du premier mode de réalisation décrit précédemment, et ne sont donc pas décrits à nouveau.

On conçoit ainsi que le système d'alimentation selon l'invention permet de réduire la durée nécessaire au blocage des thyristors du dispositif de protection, afin de limiter la période de temps durant laquelle l'élément de la machine électrique n'est pas alimenté.

## Revendications

1. Système (16) d'alimentation d'un élément (18), parmi un rotor (18) et un stator (20), d'une machine électrique (14), du type comprenant :
- un convertisseur (30) d'un courant continu d'entrée en un courant alternatif polyphasé de sortie comportant une pluralité M de phases, le convertisseur (30) comprenant deux bornes d'entrée (42A, 42B), le convertisseur (30) étant disposé en entrée dudit élément (18) et étant propre à délivrer audit élément (18) le courant alternatif polyphasé,
- des moyens (32) de commande du convertisseur (30),
- une banque de stockage (34) comportant au moins un condensateur de stockage (66, 68) disposé entre les bornes d'entrée (42A, 42B) du convertisseur, et
- un dispositif (36) de protection de l'élément (18) contre les surtensions et/ou les surintensités dudit courant alternatif polyphasé, disposé entre le convertisseur (30) et ledit élément (18), et comportant une pluralité de branches de commutation (76) agencées entre les phases respectives du courant alternatif polyphasé, chaque branche de commutation (76) comportant deux thyristors (78) connectés tête-bêche et en parallèle,
**caractérisé en ce que** les moyens (32) de commande du convertisseur (30) sont propres à appliquer une tension négative aux bornes d'au moins un thyristor (78) pendant une durée supérieure à un temps de désamorçage (Tq) prédéterminé dudit thyristor (78).

2. Système (16) selon la revendication 1, dans lequel chaque branche de commutation (76) comporte également deux résistances (80), chacune étant connectée en série d'un thyristor (78) respectif.

3. Système (16) selon la revendication 1 ou 2, dans lequel le dispositif de protection (36) comporte M branches de commutation (76), chaque branche de commutation (76) présentant une extrémité connectée à une phase respective et une autre extrémité connectée à un point commun (77), de sorte que toutes les branches de commutation (76) sont connectées en étoile audit point commun (77).

4. Système (16) selon la revendication 1 ou 2, dans lequel le dispositif de protection (36) comporte M-1 branches de commutation (76), chaque branche de commutation (76) étant connectée entre deux phases successives.

5. Système (16) selon l'une quelconque des revendications précédentes, dans lequel tous les thyristors (78) du dispositif de protection (36) sont identiques.

6. Système (16) selon l'une quelconque des revendications précédentes, dans lequel la tension du courant continu d'entrée aux bornes de la banque de stockage (34) est supérieure à 5000 V, de préférence sensiblement égale à 8000 V.

7. Système (16) selon l'une quelconque des revendications précédentes, dans lequel le nombre M de phases est égal à trois.

8. Système (16) selon l'une quelconque des revendications précédentes, comprenant en outre un transformateur de tension alternative (22) relié à un réseau électrique (12) par l'intermédiaire d'un dispositif de sectionnement (24), et un redresseur de tension (28) connecté entre le transformateur de tension (22) et le convertisseur (30).

9. Chaîne de traction électrique (10) comprenant une machine électrique (14) et un système (16) d'alimentation d'un élément parmi un rotor (18) et un stator (20) de la machine électrique (14), **caractérisée en ce que** le système d'alimentation (16) est conforme à l'une quelconque des revendications précédentes, et est propre à alimenter le rotor (18) de la machine électrique (14), le rotor (18) étant connecté en sortie du convertisseur (30).

10. Procédé de commande d'un système (16) d'alimentation d'un élément, parmi un rotor (18) et un stator (20), d'une machine électrique (14), le système d'alimentation (16) comprenant :
- un convertisseur (30) d'un courant continu d'entrée en un courant alternatif polyphasé de sortie comportant une pluralité M de phases, le convertisseur (30) étant disposé en entrée dudit élément (18) et propre à délivrer audit élément (18) le courant alternatif polyphasé, le convertisseur (30) comprenant une borne positive d'entrée (42A), une borne négative d'entrée (42B) et M bornes de sortie (44), la borne positive (42A) étant reliée au potentiel positif du courant continu d'entrée, la borne négative (42B) étant reliée au potentiel négatif du courant continu d'entrée, chaque borne de sortie (44) correspondant à une phase respective du courant de sortie,
- des moyens (32) de commande du convertisseur (30),
- une banque de stockage (34) comportant au moins un condensateur de stockage (66, 68) disposé entre les bornes d'entrée (42A, 42B) du convertisseur (30), et
- un dispositif (36) de protection de l'élément (18) contre les surtensions et/ou les surintensités dudit courant alternatif polyphasé, le dispositif de protection (36) étant disposé entre le convertisseur (30) et ledit élément (18), et comportant une pluralité de branches de commutation (76) agencées entre les phases respectives du courant alternatif polyphasé, chaque branche de commutation (76) comportant deux thyristors (78) connectés tête-bêche en parallèle, chaque thyristor (78) présentant un temps de désamorçage (Tq) prédéterminé,
le procédé étant **caractérisé en ce qu'**il comprend, pour une unique phase sélectionnée, les étapes suivantes :
- le calcul de signaux de commande du convertisseur (30) suivant une loi de commande, la loi de commande comportant :
+ une première période de connexion de la borne de sortie (44) de ladite phase sélectionnée à la borne positive d'entrée (42A), les autres bornes de sortie (44) étant connectées à la borne négative d'entrée (42B), afin d'imposer une tension négative aux bornes d'un thyristor (78) de la branche de commutation (76) reliée à la borne de sortie de ladite phase sélectionnée, la durée de la première période étant supérieure au temps de désamorçage (T_{q}) dudit thyristor, et
+ une deuxième période de connexion de la borne de sortie (44) de ladite phase sélectionnée à la borne négative d'entrée (42B), les autres bornes de sortie (44) étant connectées à la borne positive d'entrée (42A), afin d'imposer une tension négative aux bornes de l'autre thyristor (78) de la branche de commutation reliée à la borne de sortie de ladite phase sélectionnée, la durée de la deuxième période étant supérieure au temps de désamorçage (Tq) dudit autre thyristor,
- l'application des signaux de commande calculés au convertisseur (30).

11. Procédé de commande selon la revendication 10, comprenant, pour chacune des M phases du courant alternatif polyphasé de sortie, les étapes suivantes :
- ladite étape de calcul des signaux de commande du convertisseur (30) suivant la loi de commande comportant la première période de connexion de la borne de sortie (44) de la phase respective à la borne positive d'entrée (42A), les autres bornes de sortie (44) étant connectées à la borne négative d'entrée (42B), et la deuxième période de connexion de la borne de sortie (44) de la phase respective à la borne négative d'entrée (42B), les autres bornes (44) de sortie étant connectées à la borne positive d'entrée (42A), et
- ladite étape d'application des signaux de commande calculés au convertisseur.

12. Procédé de commande selon la revendication 10 ou 11, la banque de stockage (34) comprenant deux condensateurs de stockage (66, 68) disposés entre les bornes d'entrée (42A, 42B) du convertisseur et reliés entre eux en un point milieu (70), le point milieu (70) étant connecté à une masse électrique (72) d'une part et à une borne de référence (43) du convertisseur (30) d'autre part, procédé dans lequel les autres bornes de sortie (44) sont reliées à la borne négative d'entrée (42B) ou à la borne de référence (43) lors de la première période de la loi de commande, et dans lequel les autres bornes de sortie sont reliées à la borne positive d'entrée (42A) ou à la borne de référence (43) lors de la deuxième période de la loi de commande.

13. Procédé de commande selon la revendication 12, dans lequel les autres bornes de sortie (44) sont reliées à la borne de référence (43) lors des première et deuxième périodes de la loi de commande.

14. Procédé de commande selon l'une quelconque des revendications 10 à 13, dans lequel le temps de désamorçage (Tq) de chaque thyristor (78) est compris entre 300 us et 700 µs, de préférence égal à 500 µs.

## Patentansprüche

1. Versorgungsvorrichtung (16) für ein zu einem Rotor (18) oder einem Stator (20) gehörenden Element (18) einer elektrischen Maschine (14), aufweisend:
- einen Konverter (30) zum Wandeln eines Eingangsgleichstromes in einen mehrphasigen Ausgangswechselstrom, der eine Mehrzahl M von Phasen aufweiset, wobei der Konverter (30) zwei Eingangsanschlüsse (42A, 42B) aufweist, wobei der Konverter (30) am Eingang dieses Elements (18) angeordnet ist und dazu geeignet ist, diesem Element (18) den mehrphasigen Wechselstrom bereitzustellen,
- Steuerungsmittel (32) für den Konverter (30),
- eine Speicherbank (34) aufweisend zumindest einen Speicherkondensator (66, 68), der zwischen den Eingangsanschlüssen (42A, 42B) des Konverters angeordnet ist und
- eine Schutzeinrichtung (36) für das Element (18) gegen Überspannungen und/oder Überströme dieses mehrphasigen Wechselstromes, die zwischen dem Konverter (30) und diesem Element (18) angeordnet ist und eine Mehrzahl von Kommutierungszweigen (76) aufweist, die zwischen den jeweiligen Phasen des mehrphasigen Wechselstromes angeordnet sind, wobei jeder Kommutierungszweig (76) zwei Thyristoren (78) aufweist, die entgegengesetzt und parallel geschaltet sind,
**dadurch gekennzeichnet, dass** die Steuerungsmittel (32) für den Konverter (30) dazu geeignet sind, an die Anschlüsse wenigstens eines Thyristors (78) während einer Dauer, die größer ist als eine durch diesen Thyristor (78) vorgegebene Freiwerdezeit (Tq) eine negative Spannung anzulegen.

2. Vorrichtung (16) nach Anspruch 1, bei der jeder Kommutierungszweig (76) auch zwei Widerstände (80) aufweist, wobei jeder in Reihe mit einem jeweiligen Thyristor (78) geschaltet ist.

3. Vorrichtung (16) nach Anspruch 1 oder 2, bei der die Schutzeinrichtung (36) M Kommutierungszweige (76) aufweist, wobei jeder Kommutierungszweig (76) ein Ende aufweist, das mit einer jeweiligen Phase verbunden ist und ein anderes Ende aufweist, das mit einem gemeinsamen Punkt (77) verbunden ist, derart, dass alle Kommutierungszweige (76) sternförmig mit diesem gemeinsamen Punkt (77) verbunden sind.

4. Vorrichtung (16) nach Anspruch 1 oder 2, bei der die Schutzeinrichtung (36) M-1 Kommutierungszweige (76) aufweist, wobei jeder Kommutierungszweig (76) zwischen zwei aufeinanderfolgende Phasen geschaltet ist.

5. Vorrichtung (16) nach einem der vorhergehenden Ansprüche, bei der alle Thyristoren (78) der Schutzeinrichtung (36) identisch sind.

6. Vorrichtung (16) nach einem der vorhergehenden Ansprüche, bei der die Eingangsgleichspannung an den Anschlüssen der Speicherbank (34) größer ist als 5000 V, vorzugsweise im Wesentlichen gleich 8000 V.

7. Vorrichtung (16) nach einem der vorhergehenden Ansprüche, bei der die Anzahl M der Phasen gleich drei ist.

8. Vorrichtung (16) nach einem der vorhergehenden Ansprüche, ferner aufweisend einen Wechselspannungstransformator (22), der mit einem elektrischen Netz (12) unter Zwischenschaltung einer Trenneinrichtung (24) verbunden ist, und einen Spannungsgleichrichter (28), der zwischen den Spannungstransformator (22) und den Konverter (30) geschaltet ist.

9. Elektrischer Antriebsstrang (10), aufweisend eine elektrische Maschine (14) und eine Versorgungsvorrichtung (16) für ein zu einem Rotor (18) oder einem Stator (20) gehörenden Element der elektrischen Maschine (14), **dadurch gekennzeichnet, dass** die Versorgungsvorrichtung (16) einem der vorhergehenden Ansprüche entspricht und dazu geeignet ist, den Rotor (18) der elektrischen Maschine (14) zu versorgen, wobei der Rotor (18) an den Ausgang des Konverters (30) angeschlossen ist.

10. Verfahren zur Steuerung einer Versorgungsvorrichtung (16) eines zu einem Rotor (18) oder einem Stator (20) gehörenden Elements einer elektrischen Maschine (14), wobei die Versorgungsvorrichtung (16) aufweist:
- einen Konverter (30) zum Wandeln eines Eingangsgleichstromes in einem mehrphasigen Ausgangswechselstrom, aufweisend eine Mehrzahl M von Phasen, wobei der Konverter (30) am Eingang des Elements (18) angeordnet ist und geeignet ist, dem Element (18) den mehrphasigen Wechselstrom bereitzustellen, wobei der Konverter (30) einen positiven Eingangsanschluss (42A), einen negativen Eingangsanschluss (42B) und M Ausgangsanschlüsse (44) aufweist, wobei der positive Anschluss (42A) mit dem positiven Potenzial des Eingangsgleichstromes verbunden ist, wobei der negative Anschluss (42B) mit dem negativen Potenzial des Eingangsgleichstromes verbunden ist, wobei jeder Ausgangsanschluss (44) einer jeweiligen Phase des Ausgangsstromes entspricht,
- Steuerungsmittel (32) für den Konverter (30),
- eine Speicherbank (34), aufweisend wenigstens einen Speicherkondensator (66, 68), der zwischen den Eingangsanschlüssen (42A, 42B) des Konverters (30) angeordnet ist und
- eine Schutzeinrichtung (36) für das Element (18) gegen Überspannungen und/oder Überströme dieses mehrphasigen Wechselstromes, wobei die Schutzeinrichtung (36) zwischen dem Konverter (30) und diesem Element (18) angeordnet ist und eine Mehrzahl von Kommutierungszweigen (76) aufweist, die zwischen den jeweiligen Phasen des mehrphasigen Wechselstromes angeordnet sind, wobei jeder Kommutierungszweig (76) zwei Thyristoren (78) aufweist, die entgegengesetzt und parallel angeordnet sind, wobei jeder Thyristor (78) eine vorgegebene Freiwerdezeit (Tq) angibt,
wobei das Verfahren **dadurch gekennzeichnet ist, dass** es für eine einzelne ausgewählte Phase die folgenden Schritte aufweist:
- Berechnung der Steuerungssignale für den Konverter (30) gemäß einem Steuerungsgesetz, wobei das Steuerungsgesetz aufweist:
+ eine erste Zeitspanne einer Verbindung des Ausgangsanschlusses (44) dieser ausgewählten Phase mit dem positiven Eingangsanschluss (42A), wobei die anderen Ausganganschlüsse (44) mit dem negativen Eingangsanschluss (42B) verbunden sind, um eine negative Spannung an die Anschlüsse eines Thyristors (78) des Kommutierungszweigs (76) anzulegen, der mit dem Ausgangsanschluss dieser ausgewählten Phase verbunden ist, wobei die Dauer der ersten Zeitspanne größer ist als die Freiwerdezeit (Tq) dieses Thyristors und
+ eine zweite Zeitspanne der Verbindung des Ausgangsanschlusses (44) der ausgewählten Phase mit dem negativen Anschluss (42B), wobei die anderen Ausganganschlüsse (44) mit dem positiven Eingang (42A) verbunden sind, um eine negative Spannung an die Anschlüsse des anderen Thyristors (78) des Kommutierungszweigs anzulegen, der mit dem Ausgangsanschluss dieser ausgewählten Phase verbunden ist, wobei die Dauer der zweiten Zeitspanne größer ist als die Freiwerdezeit (T_{q}) dieses anderen Thyristors,
- Anlegen der berechneten Steuerungssignale an den Konverter (30).

11. Verfahren nach Anspruch 10, aufweisend für jede der M Phasen des mehrphasigen Ausgangsstromes die nachfolgenden Schritte:
- diesen Schritt der Berechnung der Steuerungssignale für den Konverter (30) gemäß des Steuerungsgesetzes, aufweisend die erste Zeitspanne der Verbindung des Ausgangsanschlusses (44) der betreffenden Phase mit den positiven Eingangsanschluss (42A), wobei die anderen Ausgangsanschlüsse (44) mit dem negativen Eingangsanschluss (42B) verbunden sind, sowie die zweite Zeitspanne der Verbindung des Ausgansanschlusses (44) der betreffenden Phase mit dem negativen Eingangsanschluss (42B), wobei die anderen Ausganganschlüsse (44) mit dem positiven Eingangsanschluss (42A) verbunden sind und
- diesen Schritt des Anlegens der berechneten Steuerungssignale an den Konverter.

12. Verfahren zur Steuerung nach Anspruch 10 oder 11, wobei die Speicherbank (34) zwei Speicherkondensatoren (66, 68) aufweist, die zwischen den Eingangsanschlüssen (42A, 42B) des Konverters angeordnet sind und miteinander an einem Mittelpunkt (70) verbunden sind, wobei der Mittelpunkt (70) mit einer elektrischen Masse (72) einerseits und mit einem Referenzanschluss (43) des Konverters (30) andererseits verbunden ist, wobei bei dem Verfahren die anderen Ausgangsanschlüsse (44) während der ersten Zeitspanne des Steuerungsgesetzes mit dem negativen Eingangsanschluss (42B) oder mit dem Referenzanschluss (43) verbunden sind, und bei dem die anderen Ausgangsanschlüsse während der zweiten Zeitspanne des Steuerungsgesetzes mit dem positiven Eingangsanschluss (42A) oder mit dem Referenzanschluss (43) verbunden sind.

13. Verfahren zur Steuerung nach Anspruch 12, bei dem die anderen Ausganganschlüsse (44) während der ersten und der zweiten Zeitspannen des Steuerungsgesetzes mit dem Referenzanschluss (43) verbunden sind.

14. Verfahren zur Steuerung nach einem der Ansprüche 10 bis 13, bei dem die Freiwerdezeit (Tq) jedes Thyristors (78) zwischen 300 µs und 700 µs, vorzugsweise gleich 500 µs ist.

## Claims

1. System (16) for powering an element (18), among a rotor (18) and a stator (20), of an electric machine (14), of the type comprising:
- a converter (30) converting a DC input current into a polyphase AC output current comprising a plurality M of phases, the converter (30) comprising two input terminals (42A, 42B), the converter (30) being arranged at the input of said element (18) and being designed to deliver to said element (18) the polyphase AC current,
- means (32) for controlling the converter (30),
- a storage bank (34) comprising at least one storage capacitor (66, 68) arranged between the input terminals (42A, 42B) of the converter, and
- a device (36) for protecting the element (18) against the overvoltages and/or the overcurrents of said polyphase AC current, arranged between the converter (30) and said element (18), and comprising a plurality of switching branches (76) arranged between the respective phases of the polyphase AC current, each switching branch (76) comprising two thyristors (78) connected head-to-tail and in parallel,
**characterized in that** the means (32) for controlling the converter (30) are designed to apply a negative voltage to the terminals of at least one thyristor (78) during a time greater than a predetermined circuit commutated turn off time (Tq) of said thyristor (78).

2. System (16) according to Claim 1, wherein each switching branch (76) also comprises two resistors (80), each being connected in series with a respective thyristor (78).

3. System (16) according to Claim 1 or 2, wherein the protection device (36) comprises M switching branches (76), each switching branch (76) having one end connected to a respective phase and another end connected to a common point (77), such that all the switching branches (76) are connected to said common point (77) in a wye configuration.

4. System (16) according to Claim 1 or 2, wherein the protection device (36) comprises M-1 switching branches (76), each switching branch (76) being connected between two successive phases.

5. System (16) according to any one of the preceding claims, wherein all the thyristors (78) of the protection device (36) are identical.

6. System (16) according to any one of the preceding claims, wherein the voltage of the DC input current at the terminals of the storage bank (34) is greater than 5000 V, preferably substantially equal to 8000 V.

7. System (16) according to any one of the preceding claims, wherein the number M of phases is equal to three.

8. System (16) according to any one of the preceding claims, also comprising an AC voltage transformer (22) linked to an electrical network (12) via a sectioning device (24), and a voltage rectifier (28) connected between the voltage transformer (22) and the converter (30).

9. Electric traction chain (10) comprising an electrical machine (14) and a system (16) for powering an element among a rotor (18) and a stator (20) of the electrical machine (14), **characterized in that** the powering system (16) conforms to any one of the preceding claims, and is designed to power the rotor (18) of the electrical machine (14), the rotor (18) being connected at the output of the converter (30).

10. Method for controlling a system (16) for powering an element, among a rotor (18) and a stator (20), of an electrical machine (14), the powering system (16) comprising:
- a converter (30) converting a DC input current into a polyphase AC output current comprising a plurality M of phases, the converter (30) being arranged at the input of said element (18) and designed to deliver to said element (18) the polyphase AC current, the converter (30) comprising a positive input terminal (42A), a negative input terminal (42B) and M output terminals (44), the positive terminal (42A) being linked to the positive potential of the DC input current, the negative terminal (42B) being linked to the negative potential of the DC input current, each output terminal (44) corresponding to a respective phase of the output current,
- means (32) for controlling the converter (30),
- a storage bank (34) comprising at least one storage capacitor (66, 68) arranged between the input terminals (42A, 42B) of the converter (30), and
- a device (36) for protecting the element (18) against the overvoltages and/or the overcurrents of said polyphase AC current, the protection device (36) being arranged between the converter (30) and said element (18), and comprising a plurality of switching branches (76) arranged between the respective phases of the polyphase AC current, each switching branch (76) comprising two thyristors (78) connected head-to-tail in parallel, each thyristor (78) exhibiting a predetermined circuit commutated turn off time (Tq),
the method being **characterized in that** it comprises, for a selected single phase, the following steps:
- the calculation of control signals for the converter (30) according to a control law, the control law comprising:
+ a first period of connection of the output terminal (44) of said selected phase to the positive input terminal (42A), the other output terminals (44) being connected to the negative input terminal (42B), in order to impose a negative voltage on the terminals of a thyristor (78) of the switching branch (76) linked to the output terminal of said selected phase, the duration of the first period being greater than the circuit commutated turn off time (Tq) of said thyristor, and
+ a second period of connection of the output terminal (44) of said selected phase to the negative input terminal (42B), the other output terminals (44) being connected to the positive input terminal (42A), in order to impose a negative voltage on the terminals of the other thyristor (78) of the switching branch linked to the output terminal of said selected phase, the duration of the second period being greater than the circuit commutated turn off time (Tq) of said other thyristor,
- the application of the calculated control signals to the converter (30).

11. Control method according to Claim 10, comprising, for each of the M phases of the polyphase AC output current, the following steps:
- said step of calculation of the control signals for the converter (30) according to the control law comprising the first period of connection of the output terminal (44) of the respective phase to the positive input terminal (42A), the other output terminals (44) being connected to a negative input terminal (42B), and the second period of connection of the output terminal (44) of the respective phase to the negative input terminal (42B), the other output terminals (44) being connected to the positive input terminal (42A), and
- said step of application of the calculated control signals to the converter.

12. Control method according to Claim 10 or 11, the storage bank (34) comprising two storage capacitors (66, 68) arranged between the input terminals (42A, 42B) of the converter and linked together at a mid-point (70), the mid-point (70) being connected to an electrical ground (72) on the one hand and to a reference terminal (43) of the converter (30) on the other hand, a method in which the other output terminals (44) are linked to the negative input terminal (42B) or to the reference terminal (43) during the first period of the control law, and in which the other output terminals are linked to the positive input terminal (42A) or to the reference terminal (43) during the second period of the control law.

13. Control method according to Claim 12, wherein the other output terminals (44) are linked to the reference terminal (43) during the first and second periods of the control law.

14. Control method according to any one of Claims 10 to 13, wherein the circuit commutated turn off time (Tq) of each thyristor (78) is between 300 µs and 700 µs, preferably equal to 500 µs.
